Europäisches Patentamt

European Patent Office

Office européen des brevets

(19)

(11) Publication number: **0 117 574**
**A1**

## (12) EUROPEAN PATENT APPLICATION

(21) Application number: **84200138.0**

(22) Date of filing: **02.02.84**

(51) Int. Cl.³: **G 01 F 23/28**

(30) Priority: **28.02.83 GB 8305531**

(43) Date of publication of application: **05.09.84**
Bulletin 84/36

(84) Designated Contracting States: **DE FR GB IT NL SE**

(71) Applicant: **SHELL INTERNATIONALE RESEARCH MAATSCHAPPIJ B.V., Carel van Bylandtlaan 30, NL-2596 HR Den Haag (NL)**

(72) Inventor: **Cole, John Bernard, c/o Thornton Research Centre P.O. Box 1, Chester Cheshire, CH1 3SH (GB)**

(74) Representative: **Pulster, Antonius Tonnis, Mr. et al, P.O. Box 302, NL-2501 CH The Hague (NL)**

(54) **A method and apparatus for optical tank gauging.**

(57) A method for determining the level of the surface of a material in a storage tank or vessel comprising the steps of modulating electrically an optical radiation beam by a frequency f, transmitting said beam to the surface of the material through a first transmitting means $S_1$, receiving the beam reflected from said surface through a first receiving means $D_1$ and coupling optically the said means $S_1$ and $D_1$ to a second transmitting means $S_2$ and a second receiving means $D_2$ respectively in such a way that permanent optical coupling exists between $S_1$ and $D_2$, $S_2$ and $D_1$ and $S_2$ and $D_2$ respectively, and further comprising the step of detecting the phases of the outputs of the first and second receiving means $D_1$ and $D_2$ respectively and deriving from this detection formation as to the level in the tank or vessel.

An apparatus for determining the level of the surface of a material in a storage tank or vessel comprising means for modulating electrically an optical radiation beam by a frequency f, and comprising a first and a second means $S_1$ and $S_2$ respectively for transmitting an optical radiation beam, the said first means $S_1$ being adapted to transmit its beam to the surface of the material, and further comprising a first and a second means $D_1$ and $D_2$ respectively for receiving an optical radiation beam, the said first means $D_1$ being adapted to receive the beam reflected from said surface, whereas the first and second transmitting means $S_1$ and $S_2$ and the first and second receiving means $D_1$ and $D_2$ are connected

in such a way that permanent optical coupling exists between $S_1$ and $D_2$, $S_2$ and $D_1$ and $S_2$ and $D_2$ respectively, and further comprising means for detecting the phases of the outputs of the said first and second receiving means $D_1$ and $D_2$ respectively and means for deriving from this detection information as to the level in the tank or vessel.

0117574

K 6214

A METHOD AND APPARATUS FOR OPTICAL TANK GAUGING

The invention relates to a method and apparatus for measuring the position of an interface between different materials in a storage tank or vessel.

There are many devices, which are presently available for measuring the interface positions between two or more different materials. Such devices may for example be used for determining the level of a material (for example liquid) being present in a (storage) vessel or container.

Various techniques are known to provide such level or interface position measurements. An example of such a known technique is the use of microwaves.

According to this known technique high-frequency electromagnetic waves are directed towards the liquid level in the tank, where they are reflected from the liquid surface. The propagation time in the gas above the liquid gives a level-indication.

This technique is virtually independent on the gas and the nature of the liquid, but is rather costly.

Further, undesirable spurious reflections from the vessel walls often create detection problems.

Further, optical rangefinders exist which employ one or more discrete frequencies and measure the phase of the modulation of the reflected light. However, measuring phases and phase differences may provide technical difficulties and a good accuracy is not always obtained.

In U.K. patent application 8,224,564 filed August 26, 1982 a method and system are proposed to measure liquid levels in tanks using the amplitude modulated beam principle. In order to overcome errors due to variable phase shifts in the light source, the detector and the associated circuits it was proposed to employ a fibre optic switch to alternate between the measurement path and a stable reference path.

In order to overcome leakage across an imperfect switch it was proposed to vary the modulation frequency to obtain equality of phase for the two paths. The present invention now proposes an alternative method and system to obtain similar results which eliminate the need of a fibre optic switch, and hence for a continuously variable modulation frequency.

It is therefore an object of the invention to provide a method and apparatus for measuring the level of a material or the position of an interface between different materials, which is accurate and cheap and provides results, which are not affected by changes in the physical properties of the liquid.

It is another object of the invention to provide a method and apparatus for determining the level in a tank, which achieve complete elimination of all level-independent phase errors without the use of moving parts.

The invention therefore provides a method for determining the level of the surface of a material in a storage tank or vessel characterized by the steps of modulating electrically an optical radiation beam by a frequency f, transmitting said beam to the surface of the material through a first transmitting means $S_1$, receiving the beam reflected from said surface through a first receiving means $D_1$ and coupling optically the said means $S_1$ and $D_1$ to a second transmitting means $S_2$ and a second receiving means $D_2$, respectively, in such a way that permanent optical coupling exists between $S_1$ and $D_2$, $S_2$ and $D_1$ and $S_2$ and $D_2$, respectively, and further comprising the step of detecting the phases of the outputs of the first and second receiving means $D_1$ and $D_2$ respectively and deriving from this detection information as to the level in the tank or vessel.

The invention further provides an apparatus for determining the level of the surface of a material in a storage tank or vessel characterized by means for modulating electrically an optical radiation beam by a frequency f, and comprising a first and a second means $S_1$ and $S_2$ respectively for transmitting an optical radiation beam, the said first means $S_1$ being adapted to transmit its beam to the surface of the material, and further comprising a first and a second means $D_1$ and $D_2$ respectively for receiving an optical radiation beam, the said first means $D_1$ being adapted to receive the beam reflected from said surface, whereas the first and second transmitting means $S_1$ and $S_2$ and the first and second receiving means $D_1$ and $D_2$ are connected in such a way that permanent optical coupling exists between $S_1$ and $D_2$, $S_2$ and $D_1$ and $S_2$ and $D_2$ respectively, and further comprising means for detecting the phases of the outputs of the said first and second receiving means $D_1$ and $D_2$ respectively and means for deriving from this detection information as to the level in the tank or vessel.

As already indicated, the present invention is based upon the modulation (in particular amplitude modulation) of an optical beam such as a laser by a certain frequency and on the use of a second light source and second detector in order to be able to determine three stable optical "reference paths". These "reference paths" are used to determine the position of the interface.

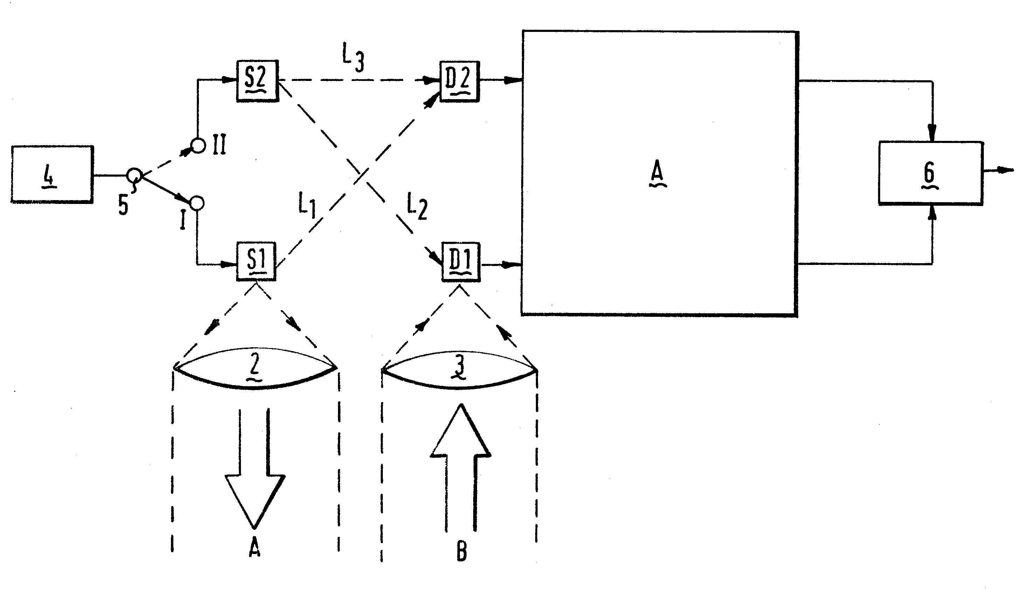

The invention will now be described by way of example in more detail with reference to the figure of the accompanying drawing, which shows schematically the principle of the invention.

With reference now to the figure a first optical source or transmitting means $S_1$ such as for example a laser diode is installed in the roof of a tank in any way suitable for the purpose, for example a flange connection (not shown for reasons of clarity) and is adapted to transmit a radiation-beam "A" through a lens 2 to the liquid surface in the tank (not shown). In an advantageous embodiment of the invention the radiation-beam has a wavelength of 790 nm (near infrared).

Further a first receiving means or detector $D_1$ is installed in order to receive the radiation "B" reflected from the liquid surface through a lens 3.

The light beam of the optical source $S_1$ is electrically modulated by an oscillator 4, for example a radio-frequency oscillator at frequency f through a suitable switch 5. The switch may for example, be an electronic switch. The switch 5 has two positions (I and II). In position I the light is transmitted to the liquid surface and reflected from the liquid surface and the reflected light is focussed onto the detector $D_1$ in order to obtain a signal representative for the reflected light. Further, a second optical transmitting means or optical source $S_2$ and a second receiving means or detector $D_2$ are represented. The input of the second transmitting means $S_2$ is connected through the electronic switch 5 (position II) to the oscillator 4. The output of the second transmitting means $S_2$ is connected through any suitable means (for example conventional optical means or optical fibres) to an input of the second detector $D_2$, thus forming an optical path $l_3$, and to an input of the first detector $D_1$ (optical path $l_2$). The output of the first transmitting means $S_1$ is connected to an input of the second detector $D_2$ through any suitable means (optical path $l_1$).

The output of the second detector $D_2$ is connected through any suitable means such as amplifiers and a mixer (schematically shown as block A for reasons of clarity) to a phase detector 6. The output of the first detector $D_1$ is also connected to the phase detector 6 by similar suitable means such as amplifiers and a mixer (also schematically shown as block A). Thus, it will be clear, that by means of the switch 5 the detectors $D_1$ and

$D_2$ by means of the second position II of the switch can also view a light signal from the second transmitting means $S_2$ that has not travelled to the liquid surface. The output of the phase detector 6 is connected to any suitable processing means (not shown).

For a sinusoidal modulation at frequency f the two sources $S_1$ and $S_2$ and the two detectors $D_1$ and $D_2$ introduce phase shifts $\phi_{S_1}(f)$, $\phi_{S_2}(f)$, $\phi_{D_1}(f)$ and $\phi_{D_2}(f)$ respectively. $\phi_{D_1}$ and $\phi_{D_2}$ include contributions due to the finite bandwidth of associated circuits and any static error in the phase detector. Permanent (i.e. unswitched) optical coupling exists between $S_1$ and $D_2$, $S_2$ and $D_1$ and $S_2$ and $D_2$.

The corresponding optical paths $l_1$, $l_2$ and $l_3$ are stable, but, in general, unequal. The only optical coupling between $D_1$ and $S_1$ is via the unknown path ("A", "B").

Let 1 be the distance from the first transmitter-receiver $(S_1 - D_1)$ unit to the liquid surface. Thus, it will be clear that the unknown optical path ("A", "B") is 2 1.

With the electronic switch 5 in position I the output of the phase detector 6 is:

$$\frac{2\pi f}{c}(2l - l_1) + \phi_{D_1}(f) - \phi_{D_2}(f) - 2n\pi = \phi_1(f) \quad \ldots(1)$$

in which c is the velocity of light in the medium above the interface and n is a positive integer or zero.

Similarly, in switch position II:

$$\frac{2\pi f}{c}(l_2 - l_3) + \phi_{D_1}(f) - \phi_{D_2}(f) = \phi_2(f) \quad \ldots(2)$$

From (1) and (2) the tank level can be determined:

$$1 = \frac{c}{4\pi f}(\phi_1(f) - \phi_2(f) + 2n\pi) + \tfrac{1}{2}(l_1 + l_2 - l_3) \ldots(3)$$

In this way l can be determined independent on all unstable phase shifts. The integer n can be determined by a subsidiary measurement at a different frequency $f^*$, either with $f^*$ chosen in such a way that $n^*$ ($n^*$ being the integer or zero related to the subsidiary measurement) is certainly zero or unity, or using, for example, the method of exact fractions as described in "Geometrical and Physical Optics", R.E. Longhurst, Longmans 1957. The said determination of the integer n will not be described in more detail.

It will be appreciated that any light source and modulation suitable for the purpose may be used.

It will also be appreciated that any frequency suitable for the purpose may be used. In an advantageous embodiment of the invention two different frequencies f and $f^*$ being 176.55 MHz and 10.7 MHz are used alternately.

The second source $S_2$ can be of low power since its light does not traverse the unknown optical path (2 1).

It will be appreciated that the first source $S_1$ and the second source $S_2$ do not operate simultaneously. Therefore the signal-to-noise ratio at the first detector $D_1$, when it is receiving a weak return from the liquid, is not worsened by an additional light flux from the second source $S_2$.

It will further be appreciated that when monochromatic light sources are used, $S_1$ and $S_2$ need not have the same wavelength. Therefore wavelength selective filters provide a simple means of preventing spurious coupling between the first source $S_1$ and the first detector $D_1$. It will also be appreciated that the integer n could be determined by the variable frequency principle as disclosed in U.K. patent application 8224564 filed August 26,1982. In this manner the need for an accurately linear phase detector could be removed.

Various modifications of the invention will become apparent to those skilled in the art from the foregoing description and

0117574

accompanying drawing. Such modifications are intended to fall within the scope of the appended claims.

# C L A I M S

1. A method for determining the level of the surface of a material in a storage tank or vessel characterized by the steps of modulating electrically an optical radiation beam by a frequency $f$, transmitting said beam to the surface of the material through a first transmitting means $S_1$, receiving the beam reflected from said surface through a first receiving means $D_1$ and coupling optically the said means $S_1$ and $D_1$ to a second transmitting means $S_2$ and a second receiving means $D_2$ respectively in such a way that permanent optical coupling exists between $S_1$ and $D_2$, $S_2$ and $D_1$ and $S_2$ and $D_2$ respectively, and further comprising the step of detecting the phases of the outputs of the first and second receiving means $D_1$ and $D_2$ respectively and deriving from this detection information as to the level in the tank or vessel.

2. The method as claimed in claim 1 characterized in that the optical radiation beam is a laser beam.

3. The method as claimed in claim 2 characterized in that the laser beam has a wavelength of 790 nm (near infrared).

4. The method as claimed in claims 1-3 characterized in that two different frequencies $f$ and $f^*$ are used alternately.

5. The method as claimed in claim 4 characterized in that the different frequencies $f$ and $f^*$ are 176.55 MHz and 10.7 MHz respectively.

6. An apparatus for determining the level of the surface of a material in a storage tank or vessel characterized by means for modulating electrically an optical radiation beam by a frequency $f$, and comprising a first and a second means $S_1$ and $S_2$ respectively for transmitting an optical radiation beam, the said first means $S_1$ being adapted to transmit its beam to the surface of the material, and further comprising a first and a second means $D_1$ and $D_2$ respectively for receiving an optical radiation beam, the said first means $D_1$ being adapted to receive the beam reflected from said surface, whereas the first and second transmitting means $S_1$ and $S_2$ and the first and second receiving means $D_1$ and $D_2$ are connected in such a way that permanent optical coupling exists between $S_1$ and $D_2$, $S_2$ and $D_1$ and $S_2$ and $D_2$ respectively, and further comprising means for detecting the phases of the outputs of the said first and second receiving means $D_1$ and $D_2$ respectively and means for deriving from this detection information as to the level in the tank or vessel.

7. The apparatus as claimed in claim 6 characterized by an electronic switch.

0117574

1/1

European Patent Office

**EUROPEAN SEARCH REPORT**

| | DOCUMENTS CONSIDERED TO BE RELEVANT | | EP 84200138.0 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A,P | WO - A1 - 83/03 135 (KENT)  <br> * Fig. 1; page 2, line 6 - page 5, line 3; page 6, line 5 - page 9, line 15 *  <br> -- | 1-3,5, 6 | G 01 F 23/28 |
| A | EP - A1 - 0 014 301 (CEDA)  <br> * Page 1, line 19 - page 6, line 12; page 17, line 2 - page 18, line 7; fig. 1-3 *  <br> -- | 1,6,7 | |
| A | DE - B - 1 207 103 (COMMISSARIAT)  <br> * Fig. 1; column 3, line 17 - column 4, line 55 *  <br> ---- | 1,6 | |
| | | | **TECHNICAL FIELDS SEARCHED (Int. Cl. ³)**  <br><br> G 01 F 23/00 |

The present search report has been drawn up for all claims

| Place of search | Date of completion of the search | Examiner |
|---|---|---|
| VIENNA | 18-05-1984 | GRONAU |